# EUROPÄISCHE PATENTSCHRIFT

(11) **EP 0 749 401 B1**
(45) Veröffentlichungstag und Bekanntmachung des Hinweises auf die Patenterteilung: **12.11.1997**
(21) Anmeldenummer: 95910546.1
(22) Anmeldetag: 02.03.1995
(51) Int. Cl.: C01C 3/18

(54) **VERFAHREN ZUR HERSTELLUNG VON CALCIUMCYANAMID AUS HARNSTOFF**
PROCESS FOR PREPARING CALCIUM CYANAMIDE FROM UREA
PROCEDE DE PREPARATION DE CYANAMIDE DE CALCIUM A PARTIR D'UREE

(30) Priorität: 11.03.1994 DE 4408271
(43) Veröffentlichungstag der Anmeldung: 27.12.1996
(73) Patentinhaber: SKW Trostberg Aktiengesellschaft, 83308 Trostberg (DE)
(72) Erfinder: WEBER, Günter, D-83342 Tacherting (DE); GRAEFE, Jürgen, D-83308 Trostberg (DE); KLIMA, Hubertus, D-83313 Siegsdorf (DE); WOLFERSTETTER, Johann, D-83308 Trostberg (DE)
(74) Vertreter: Huber, Bernhard, Dipl.-Chem.
(86) Internationale Anmeldenummer: EP9500771
(87) Internationale Veröffentlichungsnummer: WO9524358

(56) Entgegenhaltungen:
- DE-A- 4 420 750
- FR-A- 2 640 610
- US-A- 3 173 755
- DATABASE WPI Section Ch, Week 8538, Derwent Publications Ltd., London, GB; Class E33, AN 234941 G.N. ZINOVEV ET AL. 'Preparation of calcium cyanamide production by heating urea and calcium-containing substances.' & SU,A,142 444 (ZINOVEV) 28. Februar 1985
- CHEMICAL ABSTRACTS, vol. 80, no. 15, 15. April 1974, Columbus, Ohio, US; abstract no. 82027c, N.A. SOKOLOV ET AL. 'Synthesis of calcium cyanamide by the reaction of urea with calcium bases.' Seite 324 ;
- DATABASE WPI Section Ch, Week 8010, Derwent Publications Ltd., London, GB; Class E33, AN 17935C V.G. GOLOV 'Calcium cyanamide production by reacting urea with calcium oxide or hydroxide and heating cyanurate in metal cooled reactor.' & SU,A,670 537 (GOLOV) 27. Mai 1974

## Beschreibung

Die Erfindung betrifft ein Verfahren zur Herstellung von Calciumcyanamid (Kalkstickstoff) aus Harnstoff und einer sauerstoffhaltigen Calciumverbindung.

Die großtechnische Herstellung von Kalkstickstoff erfolgt bisher durch Azotierung von Calciumcarbid. Als Alternative dazu sind schon Verfahren bekannt geworden, die auf der Umsetzung von Harnstoff mit calciumhaltigen Verbindungen basieren. So ist aus der SU-PS 812 713 ein zweistufiges Verfahren bekannt, bei dem zunächst Harnstoff mit Calciumoxid oder Calciumoxidhydrat bei erhöhter Temperatur umgesetzt und anschließend das gebildete Zwischenprodukt geglüht wird. Nachteilig bei diesem Verfahren ist die aufwendige Reinigung des intermediär gebildeten Zwischenproduktes.

Wesentlich einfacher erscheint das Verfahren gemäß der SU-PS 1 333 638, bei dem man die Reaktion von Calciumoxid oder Calciumhydroxid mit Harnstoff bei 130 bis 220°C in einem inerten organischen Medium durchführt und anschließend die Reaktionsmasse bei 700 bis 900°C erhitzt. Mit Hilfe dieses Verfahrens werden Ausbeuten an Calciumcyanamid von etwa 80 bis 90 % erreicht, wobei der Gehalt an Cyanamid-Stickstoff bei 28 bis 32 % N liegt.

Etwa vergleichbare Ausbeuten erhält man entsprechend dem Verfahren der französischen Patentanmeldung 2 640 610, gemäß der man 1 Mol Calciumcarbonat mit 2 Mol Harnstoff bei einer Temperatur von 135 bis 200°C umsetzt und anschließend das Reaktionsgemisch einer weiteren Temperaturbehandlung zwischen 300 und 500°C unterwirft.

Aus der SU-A-1 142 444 ist ein vierstufiges Verfahren bekannt, bei dem in erster Stufe eine Mischung von Harnstoff und Calciumverbindung bei 140 bis 230 °C erhitzt, in zweiter Stufe das erhaltene pastenartige Produkt granuliert, in der dritten Stufe das Granulat auf 300 bis 400 °C in einem ersten Wirbelschichtreaktor erhitzt und in der letzten Stufe das aus dem ersten wirbelschichtreaktor erhaltene Produkt in einem zweiten Wirbelschichtreaktor bei 760 °C erhitzt wird. Durch diese Verfahrensführung soll die Zerkleinerung der nach vorbekannten Verfahren erhaltenen festen Masse weitgehend vermieden werden und energetisch günstiger gearbeitet werden. Diese Aufgabe löst das bekannte Verfahren jedoch auf eine sehr umständliche vierstufige Arbeitsweise, die den geltend gemachten Vorteil weitgehend wieder gegenstandslos macht.

Aus der US-A-3,173,755 ist ein Verfahren bekannt, bei dem Harnstoff und Calciumoxid in einem geschlossenen Behälter innerhalb einer halben Stunde von 130 auf 300 °C aufgeheizt und anschließend eine Stunde bei etwa 300 °C bis zur Feststoffbildung gehalten werden. Die erhaltene Masse wird abkühlen gelassen und gemahlen und das gemahlene Pulver anschließend nochmals bei 700 °C calciniert. Auch hier ist die Verfahrensführung zu kompliziert und die Flexibilität ist zu gering.

Alle diese genannten Verfahren sind im technischen Maßstab nur sehr schwierig bzw. überhaupt nicht durchzuführen, weil teilweise sehr aufwendige Aufarbeitungsschritte erforderlich sind, die auch im Hinblick auf die Wirtschaftlichkeit dieser Verfahren äußerst problematisch erscheinen.

Der Erfindung liegt daher die Aufgabe zugrunde, ein Verfahren zur Herstellung von Calciumcyanamid durch Umsetzung von Harnstoff und einer sauerstoffhaltigen Calciumverbindung zu schaffen, welches die genannten Nachteile des Standes der Technik nicht aufweist, sondern in technisch einfacher Weise hohe Ausbeuten an Calciumcyanamid gewährleistet. Diese Aufgabe wird erfindungsgemäß dadurch gelöst, daß man
a) die Umsetzung in zwei Stufen durchführt, wobei man in einer ersten Reaktionsstufe die Reaktionskomponenten unter Verdichtung und/oder Umwälzung oder durch Aufbringen auf die heiße Oberfläche bei Temperaturen von 120 bis 500 °C bis zur Feststoffbildung reagieren läßt und
b) in der zweiten Stufe das gebildete feste Reaktionsgemisch anschließend bei Temperaturen von 600 bis 900 °C calciniert.

Es hat sich überraschenderweise gezeigt, daß man erfindungsgemäß hohe Ausbeuten an Calciumcyanamid erhält, ohne daß hierbei eine aufwendige Aufarbeitung des Reaktionsproduktes nach der ersten bzw. zweiten Stufe erforderlich ist. Außerdem lassen sich nach dem erfindungsgemäßen Verfahren aufgrund der geringen Reaktionsdauer hohe Durchsätze erzielen, was ebenfalls nicht vorhersehbar war.

Das Verfahren der Erfindung umfaßt mindestens zwei Reaktionsstufen. In der ersten Reaktionsstufe werden Harnstoff und die sauerstoffhaltige Calciumverbindung bei Temperaturen von 120 bis 500 °C, vorzugsweise 150 bis 400 °C, miteinander umgesetzt. Als sauerstoffhaltige Calciumverbindung kommen hierbei in erster Linie gebrannter Kalk (Calciumioxid (CaO)), Calciumhydroxid (Ca(OH)₂) oder Calciumcarbonat (CaCO₃), aber auch Calciumalkoholate in Frage. Die Calciumverbindung wird vorzugsweise mit einer Teilchengröße von 0,1 bis 1,0 mm eingesetzt. Gemäß einer bevorzugten Ausführungsform wird Calciumcarbonat in gefällter Form verwendet, welches eine Teilchengröße von 1 bis 200 µm besitzt und aufgrund dieser Feinteiligkeit eine besonders ausgeprägte Reaktivität aufweist. Im Rahmen der Erfindung ist es hierbei möglich, das gefällte Calciumcarbonat in verunreinigter Form einzusetzen, so wie es beispielsweise bei der Weiterverarbeitung des Kalkstickstoffs zu Cyanamid, Dicyandiamid oder Thioharnstoff als meist nicht nutzbares Nebenprodukt anfällt. Das Molverhältnis von sauerstoffhaltiger Calciumverbindung zu Harnstoff kann in weiten Grenzen variiert werden, doch hat es sich als besonders vorteilhaft erwiesen, dieses Molverhältnis auf 1:1 bis 1:4 einzustellen.

Es ist erfindungswesentlich, daß man die Reaktionskomponenten in der ersten Reaktionsstufe unter Verdichtung oder/und Umwälzung oder durch Aufbringen auf eine heiße Oberfläche reagieren läßt. Die Verdichtung bzw. Umwälzung der Reaktionskomponenten läßt sich vorzugsweise dadurch realisieren, daß man die Reaktion in einem Extruder, Kneter oder Drehrohrofen durchführt, wobei man die sauerstoffhaltige Calciumverbindung und den Harnstoff vorzugsweise als Mischung in den jeweils verwendeten Reaktor einbringt. Als Extruder und Kneter kommen die technisch üblichen Vorrichtungen in Betracht, wie z.B. Schneckenextruder in Form von beispielsweise Ein- oder Mehrschneckenextrudern, oder Kneter in Form von Ein-, Zwei- oder Mehrwellenmischern. In diesen Knetern bzw. Extrudern wird das Reaktionsgemisch verdichtet, homogenisiert und gleichzeitig transportiert. Außerdem wird auf diese Weise verhindert, daß es zu Verlegungen, Anbackungen etc. im Reaktor kommt.

Anstelle des Verdichtens oder/und Umwälzens der Reaktionskomponenten kann man diese in der ersten Reaktionsstufe auch auf eine heiße Oberfläche aufbringen, die vorzugsweise in Bewegung gehalten wird. Technisch läßt sich diese Verfahrensvariante zweckmäßig mit Hilfe von Walzen- oder Bandtrocknern realisieren, auf welche die Reaktionskomponenten aufgebracht werden. Nach Abschluß der Reaktion kann dann das feste Reaktionsprodukt mechanisch z.B. mit Hilfe von Schabern, Kratzern etc. von der heißen Apparateoberfläche wieder entfernt werden. Die erste Reaktionsstufe wird so lange durchgeführt, bis es zur Feststoffbildung kommt bzw. bis die Ammoniakentwicklung beendet ist. Dies ist in der Regel je nach Reaktionstemperatur nach 0,25 bis 2 Stunden der Fall. Vorzugsweise wird die erste Reaktionsstufe a) kontinuierlich durchgeführt.

Gemäß einer bevorzugten Ausführungsform werden die Reaktionskomponenten vor der Durchführung der ersten Reaktionsstufe ganz oder teilweise in die schmelzflüssige Form übergeführt. Dies geschieht zweckmäßigerweise durch Erhitzen der Reaktionskomponenten auf eine Temperatur zwischen 130 und 250°C, wobei das Reaktionsgemisch wenigstens teilweise schmilzt und die gewünschte Reaktion einsetzt. Vorzugsweise wird diese Schmelzreaktion der Ausgangsprodukte in einem beheizten Rohrreaktor, insbesondere in einer beheizten Förderschnecke oder in einem Rührkessel durchgeführt. Die Verweilzeit in diesen Schmelzaggregaten beträgt normalerweise je nach Größe zwischen 5 und 30 Minuten. Durch diese Vorbehandlung der Reaktionskomponenten wird eine besonders rasche und vollständige Umsetzung zum gewünschten Reaktionsprodukt ermöglicht. Der Ammoniak, der während dieser Vorbehandlungsstufe und auch in der ersten Reaktionsstufe gebildet wird, kann aufgefangen und praktisch quantitativ wiederverwendet werden.

In der zweiten Reaktionsstufe wird das in der ersten Reaktionsstufe erhaltene Reaktionsgemisch dann ohne weitere Aufarbeitung oder Reinigung bei einer Temperatur von 600 bis 900°C calciniert. Diese Umsetzung kann in üblichen Vorrichtungen, wie z.B. einem Drehrohrofen, Setzofen oder auch in der Wirbelschicht vorgenommen werden, wobei eine kontinuierliche Durchführung bevorzugt ist. Sofern diese zweite Reaktionsstufe in einem Drehrohr durchgeführt wird, empfiehlt es sich, zum Zwecke der Materialzerkleinerung und der besseren Wärmeübertragung die Calcinierung in Gegenwart von Mahlkörpern aus inertem Material, wie z.B. Porzellan oder Stahl vorzunehmen, die vorzugsweise einen Durchmesser von 1 bis 100 mm aufweisen. Zur Vermeidung von unerwünschten Nebenreaktionen, die zu merklichen Ausbeuteverlusten führen können, wird die zweite Reaktionsstufe vorzugsweise unter Ausschluß von Sauerstoff und Wasser durchgeführt. Besonders bevorzugt wird deshalb die Calcinierung unter Inertgasatmosphäre, z.B. unter Stickstoff oder bei Luftausschluß unter den Reaktionsabgasen, durchgeführt.

Die zweite Reaktionsstufe, die in der Regel ebenfalls nach 0,25 bis 2 Stunden beendet ist, ergibt Calciumcyanamid in guter Reinheit und in hohen Ausbeuten. Die Ausbeuten an Calciumcyanamid betragen bis zu 97 % und sein Gehalt an Cyanamid-Stickstoff bis zu 34 %. Aufgrund dieser guten Ausbeuten sowie der technisch einfachen Reaktionsdurchführung ist das erfindungsgemäße Verfahren besonders gut für den technischen Maßstab geeignet.

Die nachfolgenden Beispiele sollen die Erfindung näher erläutern.

### Beispiele

### Beispiel 1

500 g Harnstoff und die dem jeweiligen Molverhältnis entsprechende Menge (186 bzw. 155 g) an Calciumoxid (Teilchengröße < 500 µm) wurden in einem Rohrreaktor bei 150°C aufgeschmolzen (Verweilzeit 7 Minuten) und anschließend auf einen rotierenden Walzentrockner aufgebracht, der auf unterschiedliche Temperaturen, wie in Tabelle 1 angegeben, aufgeheizt worden war. Das entstehende feste Reaktionsprodukt wurde nach einer Verweilzeit von 10 Minuten mit Hilfe von Schabern abgekratzt und dann in einem Drehrohr unter Stickstoffatmosphäre bei einer Temperatur von 750°C 1 Stunde lang calciniert. Die Ergebnisse zeigt Tabelle 1:

**Tabelle 1**

| Molverhältnis CaO/Harnstoff | Temperatur des Walzentrockners | Ausbeute an Calciumcyanamid [g] | N-Gehalt [Gew.-%] |
|---|---|---|---|
| a) 1:2,5 | 380°C | 232 | 30,6 |
| | 520°C | 247 | 30,1 |
| b) 1:3,0 | 300°C | 212 | 34,1 |
| | 280°C | 210 | 33,8 |

### Beispiel 2

500 g Harnstoff und die dem jeweiligen Molverhältnis entsprechende Menge (233 bzw. 186 g) an gefälltem Kalk (Teilchengröße < 200 µm) werden in einem Rohrreaktor bei 150°C aufgeschmolzen (Verweilzeit 12 Minuten) und anschließend in einem Drehrohr bei 350°C 1 Stunde lang umgesetzt in Gegenwart von Porzellankugeln (Durchmesser 20 mm).

Nach Abschluß der ersten Reaktionsstufe wird das Umsetzungsprodukt in einem Setzofen unter Stickstoffatomsphäre bei 750°C 1 Stunde lang calciniert. Die Ergebnisse zeigt Tabelle 2:

**Tabelle 2**

| Molverhältnis CaCO₃: Harnstoff | Ausbeute an Calciumcyanamid [g] | N-Gehalt [Gew.-%] |
|---|---|---|
| a) 1:2 | 281 | 29,5 |
| b) 1:3 | 290 | 30,1 |

### Beispiel 3

73 kg/h Harnstoff und 27 kg/h CaO werden in einem Rührkessel bei ca. 160°C aufgeschmolzen (Verweilzeit ca. 10 Minuten) und die Schmelze in einem nachgeschalteten beheizten Kneter kontinuierlich umgewalzt und verdichtet. Die Temperatur am Eintritt des Kneters beträgt ca. 235°C, am Produkt-Austritt ca. 275°C. Nach Durchsatz von 1400 kg Reaktionsgemisch werden 884 kg Produkt erhalten, das durch Calcinieren bei 750°C (20 Minuten) im Drehrohr unter Luftausschluß in einen Kalkstickstoff mit einem N-Gehalt von 30,0 Gew.-% überführt wird. Die Ergebnisse zeigt Tabelle 3.

**Tabelle 3**

| Molverhältnis CaO : Harnstoff | Ausbeute an Calciumcyanamid | N-Gehalt [Gew.-%] |
|---|---|---|
| 1:2,5 | 36,0 kg/h | 30,0 |

## Patentansprüche

1. Verfahren zur Herstellung von Calciumcyanamid durch Umsetzung von Harnstoff mit einer sauerstoffhaltigen Calciumverbindung unter Erhitzen,
**dadurch gekennzeichnet,**
daß man die Umsetzung in zwei Stufen durchführt, wobei man
a) in der ersten Reaktionsstufe die Reaktionskomponenten unter Verdichtung oder/und Umwälzung oder durch Aufbringen auf eine heiße Oberfläche bei Temperaturen von 120 bis 500°C bis zur Feststoffbildung reagieren läßt, und
b) in der zweiten Stufe das gebildete feste Reaktionsgemisch anschließend bei Temperaturen von 600 bis 900°C calciniert.

2. Verfahren nach Anspruch 1,
**dadurch gekennzeichnet,**
daß die sauerstoffhaltige Calciumverbindung gebrannter Kalk und/oder Calciumhydroxid und/oder Calciumcarbonat darstellt.

3. Verfahren nach Anspruch 1,
**dadurch gekennzeichnet,**
daß man als sauerstoffhaltige Calciumverbindung gefälltes Calciumcarbonat einsetzt.

4. Verfahren nach Anspruch 3,
**dadurch gekennzeichnet,**
daß das gefällte Calciumcarbonat in verunreinigter Form verwendet wird.

5. Verfahren nach einem der Ansprüche 1 bis 4,
**dadurch gekennzeichnet,**
daß das Molverhältnis von sauerstoffhaltiger Calciumverbindung zu Harnstoff 1:1 bis 1:4 beträgt.

6. Verfahren nach einem der vorhergehenden Ansprüche,
**dadurch gekennzeichnet,**
daß man die erste Reaktionsstufe in einem Extruder durchführt.

7. Verfahren nach einem der vorhergehenden Ansprüche,
**dadurch gekennzeichnet,**
daß man die erste Reaktionsstufe in einem Kneter vornimmt.

8. Verfahren nach einem der vorhergehenden Ansprüche,
**dadurch gekennzeichnet,**
daß man die Reaktionskomponenten in der ersten Reaktionsstufe auf eine heiße Oberfläche aufbringt und den gebildeten Feststoff dann von der Oberfläche mechanisch entfernt.

9. Verfahren nach Anspruch 8,
**dadurch gekennzeichnet,**
daß man die Reaktionskomponenten auf einen Walzen- oder Bandtrockner aufbringt.

10. Verfahren nach einem der vorhergehenden Ansprüche,
**dadurch gekennzeichnet,**
daß man die erste Reaktionsstufe a) kontinuierlich durchführt.

11. Verfahren nach einem der vorhergehenden Ansprüche,
**dadurch gekennzeichnet,**
daß man die Reaktionskomponenten vor der Durchführung der ersten Reaktionsstufe durch Erwärmen auf Temperaturen von 130 bis 250°C ganz oder teilweise in die schmelzflüssige Form überführt.

12. Verfahren nach Anspruch 11,
**dadurch gekennzeichnet,**
daß man das Aufschmelzen der Reaktionskomponenten in einem beheizten Rohrreaktor, insbesondere in einer beheizten Förderschnecke oder einem Rührkessel vornimmt.

13. Verfahren nach einem der vorhergehenden Ansprüche,
**dadurch gekennzeichnet,**
daß man den in der ersten Reaktionsstufe gebildeten Ammoniak auffängt und wiederverwendet.

14. Verfahren nach einem der vorhergehenden Ansprüche,
**dadurch gekennzeichnet,**
daß man die zweite Reaktionsstufe in einem Drehrohr durchführt.

15. Verfahren nach Anspruch 14,
**dadurch gekennzeichnet,**
daß man die Calcinierung im Drehrohr in Gegenwart von Kugeln aus inertem Material vornimmt.

16. Verfahren nach einem der vorhergehenden Ansprüche,
**dadurch gekennzeichnet,**
daß man die zweite Reaktionsstufe in einem Setzofen durchführt.

17. Verfahren nach einem der vorhergehenden Ansprüche,
**dadurch gekennzeichnet,**
daß man die zweite Reaktionsstufe in einem Wirbelschichtreaktor durchführt.

18. Verfahren nach einem der vorhergehenden Ansprüche,
**dadurch gekennzeichnet,**
daß man die zweite Reaktionsstufe unter Sauerstoff- und Wasserausschluß durchführt.

19. Verfahren nach Anspruch 18,
**dadurch gekennzeichnet,**
daß man die zweite Reaktionsstufe unter Inertgasatmosphäre durchführt.

20. Verfahren nach einem der vorhergehenden Ansprüche,
**dadurch gekennzeichnet,**
daß man die zweite Reaktionsstufe b) kontinuierlich durchführt.

## Claims

1. Process for the production of calcium cyanamide by reacting urea and an oxygen-containing calcium compound while heating
**wherein**
the reaction is carried out in two steps in
a) in the first reaction step the reaction components are allowed to react under compression and/or while being circulated or by applying them to a hot surface at temperatures of 120 to 500°C until a solid is formed and
b) in the second step the solid reaction mixture that is formed is subsequently calcined at temperatures of 600 to 900°C.

2. Process as claimed in claim 1,
**wherein**
the oxygen-containing calcium compound is burnt lime and/or calcium hydroxide and/or calcium carbonate.

3. Process as claimed in claim 1,
**wherein**
precipitated calcium carbonate is used as the oxygen-containing calcium compound.

4. Process as claimed in claim 3,
**wherein**
the precipitated calcium carbonate is used in an impure form.

5. Process as claimed in claims 1 to 4,
**wherein**
the molar ratio of oxygen-containing calcium compound to urea is 1:1 to 1:4.

6. Process as claimed in one of the previous claims,
**wherein**
the first reaction step is carried out in an extruder.

7. Process as claimed in one of the previous claims,
**wherein**
the first reaction step is carried out in a kneader.

8. Process as claimed in one of the previous claims,
**wherein**
the reaction components in the first reaction step are applied to a hot surface and the solid that is formed is then mechanically scraped off the surface.

9. Process as claimed in claim 8,
**wherein**
the reaction components are applied to a drum or band dryer.

10. Process as claimed in one of the previous claims,
**wherein**
the first reaction step a) is carried out continuously.

11. Process as claimed in one of the previous claims,
**wherein**
the reaction components are completely or partially converted into a molten form by heating to temperatures of 130 to 250°C before carrying out the first reaction step.

12. Process as claimed in claim 11,
**wherein**
the reaction components are melted in a heated tubular reactor, in particular in a heated screw conveyor or in a stirred tank.

13. Process as claimed in one of the previous claims,
**wherein**
ammonia that is formed in the first reaction step is collected and reused.

14. Process as claimed in one of the previous claims,
**wherein**
the second reaction step is carried out in a rotating tube.

15. Process as claimed in claim 14,
**wherein**
the calcination in the rotating tube is carried out in the presence of balls made of an inert material.

16. Process as claimed in one of the previous claims,
**wherein**
the second reaction step is carried out in a settling furnace.

17. Process as claimed in one of the previous claims,
**wherein**
the second reaction step is carried out in a fluidized-bed reactor.

18. Process as claimed in one of the previous claims,
**wherein**
the second reaction step is carried out in the absence of oxygen and water.

19. Process as claimed in claim 18,
**wherein**
the second reaction step is carried out under an inert gas atmosphere.

20. Process as claimed in one of the previous claims,
**wherein**
the second reaction step b) is carried out continuously.

## Revendications

1. Procédé de préparation de cyanamide calcique selon lequel on fait réagir en chauffant de l'urée avec un composé de calcium oxygéné, caractérisé en ce que l'on effectue la réaction en deux étapes selon lesquelles
a) dans la première étape réactionnelle, on fait réagir les constituants de la réaction en les compactant et/ou en les faisant circuler, ou en les appliquant sur une surface chaude à des températures de 120 à 500°C, jusqu'à la formation d'un produit solide, et
b) dans la seconde étape, on calcine ensuite le mélange réactionnel solide formé à des températures de 600 à 900°C.

2. Procédé selon la revendication 1, caractérisé en ce que le composé de calcium oxygéné est constitué par de la chaux vive et/ou de l'hydroxyde de calcium et/ou du carbonate de calcium.

3. Procédé selon la revendication 1, caractérisé en ce que l'on utilise comme composé de calcium oxygéné du carbonate de calcium précipité.

4. Procédé selon la revendication 3, caractérisé en ce que l'on utilise le carbonate de calcium sous forme non purifiée.

5. Procédé selon l'une des revendications 1 à 4, caractérisé en ce que le rapport molaire du composé de calcium oxygéné à l'urée est compris entre 1:1 et 1:4.

6. Procédé selon l'une des revendications précédentes, caractérisé en ce que l'on effectue la première étape réactionnelle dans une extrudeuse.

7. Procédé selon l'une des revendications précédentes, caractérisé en ce que l'on effectue la première étape réactionnelle dans un malaxeur.

8. Procédé selon l'une des revendications précédentes, caractérisé en ce que, dans la première étape réactionnelle, on applique les constituants de la réaction sur une surface chaude, puis on enlève le produit solide formé de la surface par un moyen mécanique.

9. Procédé selon la revendication 8, caractérisé en ce que l'on applique les constituants de la réaction sur un séchoir à tambour ou à bande transporteuse.

10. Procédé selon l'une des revendications précédentes, caractérisé en ce que l'on effectue la première étape a) en continu.

11. Procédé selon l'une des revendications précédentes, caractérisé en ce que, avant d'effectuer la première étape réactionnelle, on met les constituants de la réaction totalement ou partiellement sous forme fondue par chauffage à des températures de 130 à 250°C.

12. Procédé selon la revendication 11, caractérisé en ce que l'on procède à la fusion des constituants de la réaction dans un réacteur tubulaire chauffé, en particulier dans une vis transporteuse chauffée ou dans une cuve à agitation.

13. Procédé selon l'une des revendications précédentes, caractérisé en ce que l'on recueille l'ammoniac formé dans la première étape réactionnelle et on le réutilise.

14. Procédé selon l'une des revendications précédentes, caractérisé en ce que l'on effectue la seconde étape réactionnelle dans un four tubulaire rotatif.

15. Procédé selon la revendication 14, caractérisé en ce que l'on effectue la calcination dans le four tubulaire rotatif en présence de billes d'un matériau inerte.

16. Procédé selon l'une des revendications précédentes, caractérisé en ce que l'on effectue la seconde étape réactionnelle dans un four fixe.

17. Procédé selon l'une des revendications précédentes, caractérisé en ce que l'on effectue la seconde étape réactionnelle dans un réacteur à lit fluidisé.

18. Procédé selon l'une des revendications précédentes, caractérisé en ce que l'on effectue la seconde étape réactionnelle à l'abri de l'oxygène et de l'eau.

19. Procédé selon la revendication 18, caractérisé en ce que l'on effectue la seconde étape réactionnelle sous atmosphère de gaz inerte.

20. Procédé selon lune des revendications précédentes, caractérisé en ce que l'on effectue la seconde étape réactionnelle b) en continu.
